Europäisches Patentamt

European Patent Office

Office européen des brevets

(11) Veröffentlichungsnummer: **0 158 250**
A2

(12) **EUROPÄISCHE PATENTANMELDUNG**

(21) Anmeldenummer: 85103858.8

(22) Anmeldetag: 30.03.85

(51) Int. Cl.⁴: **A 01 G 25/06**

(30) Priorität: 05.04.84 DE 3412739

(43) Veröffentlichungstag der Anmeldung:
16.10.85 Patentblatt 85/42

(84) Benannte Vertragsstaaten:
AT BE DE FR GB IT

(71) Anmelder: GARDENA Kress + Kastner GmbH
Lichternseestrasse 40 Postfach 27 47
D-7900 Ulm (Donau)(DE)

(72) Erfinder:
Die Erfinder haben auf Ihre Nennung verzichtet

(74) Vertreter: Patentanwälte Ruff und Beier
Neckarstrasse 50
D-7000 Stuttgart 1(DE)

(54) Gerät zum Anschliessen einer Bewässerungsanlage.

(57) Das Anschlußgerät (11) ist zur Vorschaltung für Bewässerungsanlagen, insbesondere Tropf-Bewässerungsanlagen, vorgesehen und wird mit seinem Einlaß (11) an ein Wassernetz angeschlossen. Es enthält ein Rückschlagventil (22), eine Filterkammer (36) mit einem topfförmigen Filtereinsatz (28), in dessen Innerem mehrere ringförmige Wirkstofftabletten (Düngertabletten) (34) aufgenommen werden können. Ein der Filterkammer nachgeschaltetes Druckregulierventil (42) arbeitet mit einer Membran (41), deren Druckkammer (48) zur Druckkonstanthaltung mit dem Druck im Auslaß-Strömungskanal (51, 52) beaufschlagt wird, jedoch beeinflußt von dem infolge der Auslaß-Strömungsgeschwindigkeit erzeugten Unterdruck, so daß die Druckregulierung von der Strömungsgeschwindigkeit abhängig ist und somit erhöhte Strömungsverluste im angeschlossenen Bewässerungssystem ausgleicht.

Fig. 1

0158250

Anmelderin:     GARDENA Kress + Kastner GmbH
                Lichternseestraße 40
                D-7900 Ulm / Donau


                Gerät zum Anschließen einer Be-
                wässerungsanlage
                ─────────────────────────────

Die Erfindung betrifft ein Anschlußgerät für Bewässerungsanlagen mit vorzugsweise zahlreichen Bewässerungsstellen, insbesondere Tropf-Bewässerungsauslässen, mit
einem Einlaß und einem Auslaß.

Die Tropf-Bewässerung, bei der dem Boden, vorzugsweise
in unmittelbarem Bereich der einzelnen Pflanzen, das
Wasser unmittelbar zugeführt wird, ohne durch Beregnungsanlagen in der Luft versprüht zu werden, hat den Vorteil, daß ein viel geringerer Anteil des Wassers direkt
verdunstet und daher der von der Pflanze aufgenommene,
nutzbare Anteil des Wassers wesentlich größer ist. Auch
die Versalzungsgefahr ständig bewässerter Böden wird
wesentlich verringert. Bei der Tropf-Bewässerung ist jedoch die Zumessung und die Reinhaltung der Tropf-
Bewässerungsauslässe ein Problem, da hier relativ kleine
Mengen über eine lange Zeit zuverlässig dosiert werden
sollen. Außerdem sind derartige Tropf-Bewässerungssysteme
besonders in Gegenden mit hohen Umgebungstemperaturen
und geringer Luftfeuchtigkeit vorteilhaft, in denen
meist die Wasserversorgung problematisch ist. Bei der
Wasserversorgung muß daher mit sehr großen Druckschwankungen gerechnet werden. Ferner stellt das weitläufige
und verzweigte Schlauch- oder Rohrsystem für diese Bewässerungsart ein Problem dar.

0158250

Derartige Tropfbewässerungssysteme und ihre Bewässerungsausläße sind aus den USA Patenten 3 727 635 und 3 841 349, erteilt am 17. April 1973 bzw. 15. Oktober 1974 für T.J. Todd
bekanntgeworden, auf die auch zum Zweck der Beschreibung dieser
Teile Bezug genommen wird.

Aufgabe der Erfindung ist es, ein Gerät zu schaffen, das die Dosier-
und Rohrleitungsprobleme für Bewässerungsanlagen vereinfacht.

Diese Aufgabe wird erfindungsgemäß dadurch gelöst, daß das Gerät in einer Einheit mit einem druckfesten Gehäuse ein Rückschlagventil, ein Filter und ein automatisches Druckregulierventil enthält, die vorzugsweise in Strömungsrichtung in dieser Reihenfolge
hintereinander angeordnet sind. Dadurch wird eine leicht transportable, kompakte Einheit geschaffen, die durch das Rückschlagventil Rückströmungen im Leitungsnetz verhindert, mit seinem Filter nicht nur das Druckregulierventil, sondern auch die Bewässerungsanlage mit den schmutzempfindlichen Bewässerungsauslässen
vor Verstopfungen  schützt. Das Druckregulierventil bewirkt, daß
in der Bewässerungsanlage an jeder Bewässerungsstelle ein einheitlicher Druck herrscht und somit unabhängig vom Druck der Wasserversorgungsanlage (Leitungsnetz oder Pumpe) ein weitgehend konstanter Auslaß
einstellbar ist. Ferner wird das Leitungssystem vor Überdruck geschützt, so daß
Schlauchleitungen von mäßiger Druckfestigkeit  verwendet werden können,
die durch einfache Aufsteckbefestigungen verbunden und angeschlossen werden können.

Vorzugsweise kann das Druckregulierventil zur Einregulierung eines bei gleichem Durchfluß-Mengenstrom im wesentlichen konstanten Auslaßdruckes ausgebildet sein und eine Kompensationseinrichtung zur Erhöhung des Auslaßdruckes bei erhöhtem Durchfluß-Mengenstrom aufweisen. Das Druckregulierventil regelt also
jeweils einen Druck in dem Bewässerungssystem ein, der mit zunehmender Durchflußmenge etwas ansteigt. Dies wirkt den bei erhöhter Strömungsgeschwindigkeit erhöhten Druckverlusten entgegen.
Dadurch ist das Anschlußgerät sehr universell einsetzbar und paßt sich den jeweils vorliegenden Bedingungen, insbesondere auch der Größe und Verzweigtheit
des Bewässerungssystems, selbsttätig an, ohne daß irgendwelche Reguliermaßnahmen manuell durchgeführt werden müssen.

Die Kompensationseinrichtung kann vorzugsweise eine Abzweigung zu dem strömenden Medium erhalten und insbesondere ein Venturirohr enthalten. Dadurch wird der durch
das strömende Medium erzeugte Druckabfall zur Regelung
der Kompensation benutzt.

Bei einer bevorzugten Ausführungsform kann das Druckregulierventil eine Druckkammer aufweisen, an die eine
einseitig vom Druck auf der Auslaßseite beaufschlagte,
einen Ventilkörper bewegende Membran angrenzt. Die Druckkammer kann dabei über die vorzugsweise als Ringdüse ausgebildete Abzweigung an einen auslaßseitigen Strömungskanal anschließen. Der Druckabfall im strömenden Medium
verringert also den auf die Membran einwirkenden Druck
und bewirkt dadurch die erwünschte Kompensation, d.h.
Druckanhebung bei erhöhter Strömungsgeschwindigkeit.

Eine besonders einfache und betriebssichere Ausführung
des Druckregulierventils wird erzielt, wenn die federbelastete Membran zentrisch den hohlen Ventilkörper umgibt, der axial bewegbar abgedichtet im Gehäuse des Anschlußgerätes geführt ist und einen Abschnitt des Auslaß-Strömungskanales umgibt. Die Abzweigung kann dabei
im Spalt zwischen dem zum Ventilkörper gehörenden
Strömungskanal-Abschnitt und dem anschließenden, im Gehäuse vorgesehenen Strömungskanal-Abschnitt ausgebildet
sein.. Diese Ausführung ist sehr raumsparend und durch
ihre bauliche und kräftemäßige Symmetrie nicht verkantungsgefährdet.

Das Gerät kann in seinem Gehäuse Aufnahmemittel für wasserlösliche Wirkstoffe enthalten, die vorzugsweise so ausgebildet sind,
daß in den als Einsatz ausgebildeten Filter ein vom Wasser axial
durchströmbarer, mit seitlichen Wasseraustritten versehener
Vorsprung hineinragt, der zur Aufnahme ringförmiger, wasserlöslicher Wirkstofftabletten ausgebildet ist. Hierdurch erfüllt
das Anschlußgerät eine dritte Funktion, nämlich als Beimischgerät für lösliche Dünger oder andere Wasserbeimengungen. Durch
die Ringform ist es nicht nur möglich, die Tabletten innerhalb
des topfförmigen Filters gut zu lagern, sondern sie sind auch
mit dem weitaus größten Teil ihrer Fläche der Flüssigkeit ausgesetzt. Die Ringform sorgt ferner dafür, daß die Beimischung
relativ konstant bleibt, obwohl die Tabletten sich bei ihrer Auflösung in ihrer Größe und Gestalt ändern. Bei fortschreitender
Auflösung wird nämlich nicht nur die Außenfläche der ring- oder
hohlzylinderförmigen Tablette infolge der Durchmesserabnahme
verringert, sondern auch die Innenfläche durch Durchmesservergrößerung des Innenumfanges vergrößert, so daß eine automatische
Kompensation auftritt. Je nach Art und Form des Vorsprunges
und der Wasserführung im Filtergehäuse kann bestimmt werden,
wie der Wirkstoffabtrag flächenmäßig erfolgen soll. Wenn die
Strömung so geführt wird, daß sowohl die Innenfläche als auch die
Außenfläche gezielt umströmt wird, dann ist der Abtrag am gleichmäßigsten. Wichtig ist aber vor allem, daß die Strömung durch das
Innere der ggf. mehrfach gestapelten, einen langgestreckten Hohlzylinder bildenden Tabletten geführt wird, weil dort normalerweise keine Eigenströmung vorliegt, wie dies infolge Verwirbelung etc. am Außenumfang ohnehin der Fall ist.

Der Vorsprung kann zentral an einem zu einem stirnseitigen Deckel
gehörenden abschraubbaren Einsatz vorgesehen sein, an dem auch
der Einlaß zentral angeordnet ist. Durch diese Anordnung ergibt sich, insbesondere zusammen mit der ebenfalls zur Längsachse
eines zylindrischen Gehäuses zentralen Anordnung des Druckregulierventils, eine besonders einfache Bauform in Form eines
Zylinders, dessen einlaß- und auslaßseitiger Deckel jeweils abschraubbar ist und die einzelnen Funktionsteile enthält. Dabei
kann im Einlaßkanal ein Rückschlagventil angeordnet sein, das
insbesondere verhindert, daß bereits mit Wirkstoff angereichertes
Wasser ins Netz zurückgelangt.

Die Merkmale der Erfindung und ihrer bevorzugten Weiterbildungen,
die aus den Ansprüchen und der Beschreibung im Zusammenhang mit
der Zeichnung hervorgehen, können jeweils für sich allein oder
zu mehreren in Form von Unterkombinationen als Erfindung verwirklicht sein.

Ein Ausführungsbeispiel der Erfindung ist in der Zeichnung dargestellt.

Fig. 1 zeigt einen Längsschnitt durch das Gerät;

Fig. 2 zeigt eine schematische Ansicht einer Bewässerungsanlage.

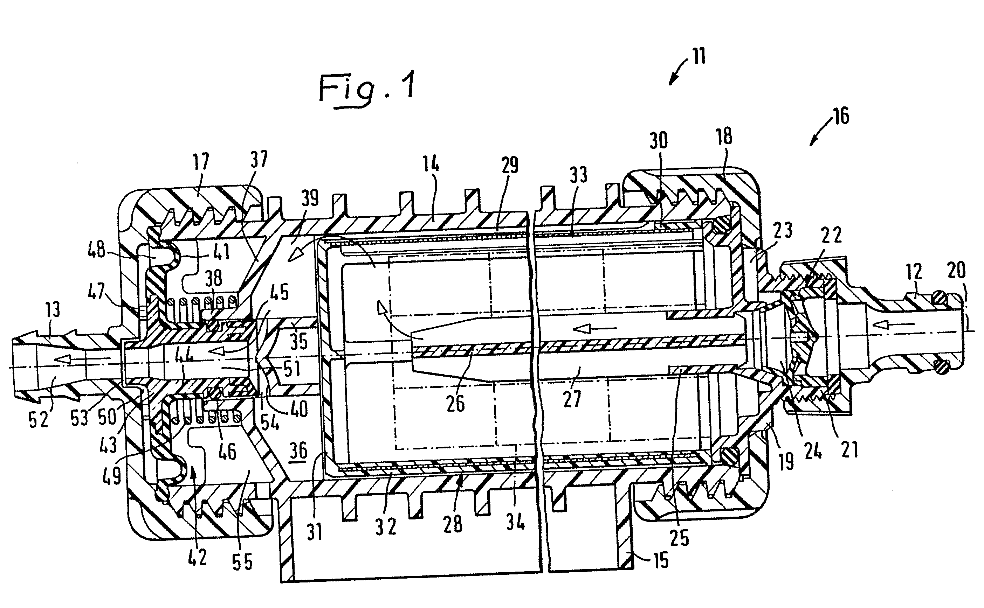

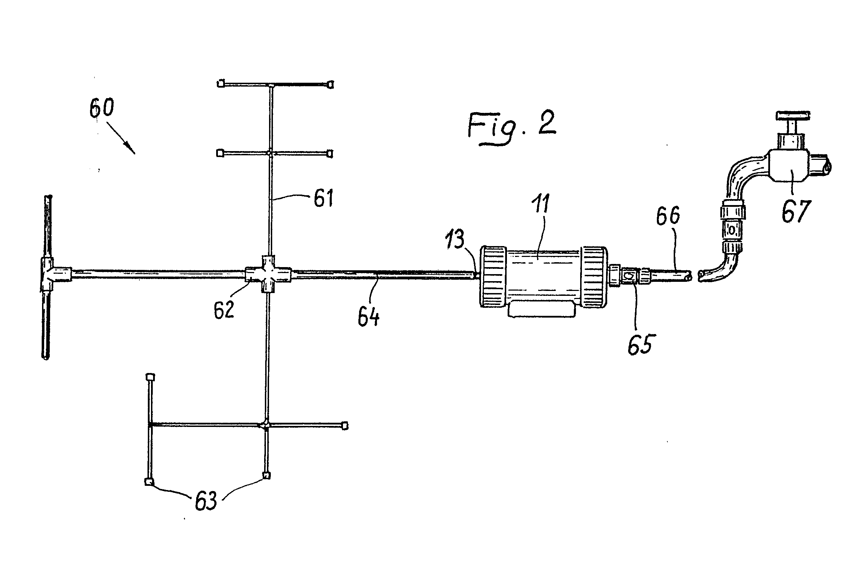

Fig. 2 zeigt eine Bewässerungsanlage 60, die aus einem verästelten
Netzwerk von Rohren oder Schläuchen 61 unterschiedlicher Durchmesser besteht, die über Abzweigstücke 62 miteinander verbunden
sind und an deren Enden auch als Tropfer bezeichnete Bewässerungsausläße 63 angeordnet sind, die nur sehr geringe Wassermengen,
praktisch in Form einzelner Tropfen, ausgeben. Die Bewässerungsanlage wird über einen Schlauch 64 an den Auslaß eines Gerätes
11 angeschlossen, das im folgenden näher beschrieben wird. Der
Einlaß des Gerätes ist über eine Schlauchkupplung 65 und einen
Schlauch 66 an ein Wasserleitungsnetz 67 angeschlossen. Das Gerät 11 wird im folgenden anhand Fig. 1 erläutert.

Das Anschlußgerät 11 besitzt einen Einlaß 12 in Form
eines Steckanschlußnippels für eine Schlauch-Schnellkupplung und einen Auslaß in Form eines Schlauchnippels, auf den ein flexibler Schlauch gesteckt werden
kann und sich dort mittels widerhakenartiger Rippen
festhält. Das Anschlußgerät ist dazu vorgesehen, mit
seinem Einlaß über einen Schlauch oder direkt an ein
Wasserversorgungsnetz angeschlossen zu werden, während
am Auslaß vorzugsweise eine Tropf-Bewässerungsanlage
angeschlossen wird. Es besteht aus einem meist stark
verästelten System aus Schläuchen, die in einem oder
mehreren Hauptsträngen in ihrem Durchmesser den Auslaßabmessungen entsprechen und zu den einzelnen Bewässerungsstellen hin auf geringere Durchmesser übergehen. Die Bewässerungsstellen enthalten Tropf-
Bewässerungsauslässe, die nur eine sehr geringe Wassermenge je Zeiteinheit austreten lassen. Sie können
üblicher Bauart sein und zur Drosselung des Wasserstroms mit Labyrinthen oder anderen Strömungskanälen
kleinen Querschnittes versehen sein.

Das Anschlußgerät 11 weist ein zylindrisches,druckfestes, an der Außenseite mit Ringrippen versehenes
Gehäuse 14 aus Kunststoff auf, das an der Unterseite
Standfüsse 15 hat. An beiden Stirnseiten wird es von
einlaß- und auslaßseitigen Deckeln 16, 17 verschlossen,
die jeweils nach Art einer Überwurfmutter auf die mit
Außengewinde versehenen Gehäuseenden aufschraubbar sind.
Beim Einlaß-Deckel 16 ist die Überwurfmutter 18 gesondert von einem Deckeleinsatz 19 vorgesehen, der einen
zentralen, d.h. zur Gerätelängsachse 20 konzentrischen
Anschlußstutzen 21 aufweist, auf den der Steckanschlußnippel geschraubt ist. In den Stutzen ist ein Rückschlagventil 22 eingesetzt, das aus einer speichenradartigen Ventilsitzplatte und einem im Querschnitt
lamda-förmigen, aus flexiblem Kunststoff bestehenden
Ventilkörper besteht, dessen schräg zur Mitte weisende
Abschnitte die Durchbrüche zwischen den Speichen des
Ventilkörpers abdecken. Der Außenumfang dichtet an der
Stutzeninnenwand ab, und ein schräg in Achsrichtung nach
innen verlaufender Wandabschnitt liegt an der Stutzenaußenwand an und verschließt dort eine ins Freie führende
Belüftungsöffnung 23.

Der zentrale axial verlaufende Zuleitungskanal 24 endet
am Deckeleinsatz mit einem ins Innere des Gehäuses 14
ragenden Stutzen 25, in den ein Vorsprung 26 in Form
eines langgestreckten Profils eingesetzt ist, der über
einen großen Teil der in der Zeichnung abgebrochen dargestellten, in der Praxis längeren Gehäuses reicht. Der
Vorsprung hat die Querschnittsform eines Kreuzes, das
an zwei einander gegenüberliegenden Seiten jeweils noch
quer verlaufende Abschnitte hat. Dadurch sind vier zur
Außenseite hin offene, parallele Rinnen 27 gebildet, die
das Wasser führen, jedoch auch seitlich austreten lassen.

Der Deckeleinsatz 19 ist am Umfang durch einen Rundschnurdichtring gegenüber dem Gehäuse abgedichtet und
legt einen Filtereinsatz 28 fest, der in das zur Abstandhaltung und Verdrehsicherung mit längs verlaufenden
Rippen 29 versehene Gehäuse eingesetzt ist. Der Filtereinsatz ist topfförmig und besteht aus einem Kunststoff-
Spritzgußteil mit einem die Mündung umgebenden Ring 30
und einem geschlossenen Boden 31, die durch Stege 32
miteinander verbunden sind. Die zwischen den Stegen entstehenden fensterartigen Ausschnitte sind von einem
Filtersieb 33 überdeckt, das mit dem beschriebenen

- 8 -

0158250

Kunststoffeinsatz durch Einspritzen oder Schweißen verbunden ist. Das Filtersieb besteht aus einem sehr feinmaschigen Gewebe aus monofilen Kunststoff-Fäden.

In den zwischen dem Vorsprung und dem Inneren des Filtereinsatzes entstehenden ringförmigen Raum können ringförmige Wirkstofftabletten 34 eingesetzt werden, die
strichpunktiert angedeutet sind. Sie sind auf den als längsprofilierter Stab ausgebildeten Vorsprung 26 aufgereiht und bilden zusammen mit den Rinnen 27 einen
Strömungskanal, durch den das Wasser strömt, bevor es
durch das Filtersieb 23 ins Gehäuse übertritt.

Der Boden 31 des Filtereinsatzes 28 stützt sich auf
einem zentralen Ventilsitzteil 35 des Gehäuses ab, das
von einer die Filterkammer 36 abschließenden Wandung 37
des Gehäuses vorspringt. Konzentrisch zur Achse 20
trägt die Wandung 37 einen zylindrischen, zur Auslaßseite hin gerichteten Stutzen 38, der in Verlängerung
des Ventilsitzteils 35 angeordnet ist. Das Ventilsitzteil 35 wird von seitlichen Stegen 39 getragen und hat
eine torisch konkav gekrümmte Ventilsitzfläche 40, die
dem Inneren des Stutzens 38 zugekehrt ist. Zwischen dem
auslaßseitigen Deckel 17 und der Gehäusestirnfläche ist
der Außenumfang einer Membran 41 eingespannt, die zu
einem Druckregulierventil 42 gehört. Die mit einer
Dehnungssicke versehene Membran ist in ihrer Mitte mit
einem hohlen Ventilkörper 43 verbunden, der dort nach
Art einer Nabe angebracht ist und einen zur Einlaßseite
hin vorspringenden hohlzylindrischen Teil 44 hat, der
mit seinem Ende den beweglichen Ventilsitz bildet und
dort mit einer elastischen, ringförmigen Ventilsitzkappe 45 versehen ist. Der Teil 44 ist im Inneren des
Stutzens 38 durch einen Rundschnurdichtring 46 abgedichtet axial beweglich geführt.

Eine Feder 47 belastet den Ventilkörper in Richtung auf
den auslaßseitigen Deckel 17, wo er über Vorsprünge 47
im Ruhezustand anliegt.

Zwischen dem Deckel 17 und der Membran 41 aus Gummi oder
flexiblem Kunststoff ist eine ringförmige Druckkammer 48
gebildet, die über eine Abzweigung 50 mit dem auslaßseitigen, zentralen Strömungskanal in Verbindung steht,
der aus zwei miteinander fluchtenden, zur Längsachse 20
zentrischen Abschnitten besteht, nämlich dem Strömungskanalabschnitt 51 im Inneren des hohlen Ventilkörpers 53
und den im Inneren des Auslaßnippels 13, d.h. dem
Deckel 17 gebildeten Abschnitt 52. Zwischen beiden Abschnitten entsteht ein ringförmiger Spalt, der so bemessen ist, daß er auch bei der dargestellten Ruheposition des Ventilkörpers noch vorhanden ist und zusammen mit einem zylindrischen Ringabschnitt die Abzweigung 50 bildet, die in die Druckkammer 48 führt.
Der Spalt 53 ändert seine Breite mit der Lage des Ventilkörpers. In seinem Bereich sind die Abschnitte 51,
52 des auslaßseitigen Strömungskanals düsenartig verengt und danach wieder erweitert, so daß sie ein Venturirohr bilden.

Das Anschlußgerät arbeitet wie folgt:

Nachdem es auslaßseitig an eine Bewässerungsanlage angeschlossen ist, kann es über seinen Einlaß 12 mit
einem Wassernetz, einer Pumpe oder dgl. verbunden
werden. Das Wasser strömt über das Rückschlagventil 22
ein, wobei es den schräg nach innen ragenden Ringdichtungsabschnitt abhebt. Es strömt dann über den Stutzen 25 in die Rinnen 27 und dort, falls Wirkstofftabletten 34
eingelegt sind, durch den in ihrem Inneren gebildeten
Strömungskanal, aus dem es vor dem Boden 31 austritt
und, nunmehr mit dem gelösten Wirkstoff angereichert,
durch das Filtersieb 33 in die Filterkammer 36 überströmt. Der Abtrag der Wirkstofftabletten, beispielsweise Düngertabletten, erfolgt sowohl von innen als
auch von außen, weil sich auch im Bereich um die
Tabletten herum eine verwirbelte Strömung bildet. Das
Wasser strömt dann durch den nach Art eines Turbineneinlasses gebildeten Ventilkanal 54 in den auslaßseitigen Strömungskanal 51, 52. Da auf der Auslaßseite durch das angeschlossene Bewässerungssystem
ein Gegendruck entsteht, pflanzt dieser sich über die
Abzweigung 50 in die Druckkammer 48 fort und wirkt auf
die Membran ein, auf deren andere Seite infolge einer
Belüftung des entsprechenden Gehäuseraumes 55
Atmosphärendruck wirkt. Der Druckkammerdruck wirkt auf
die Differenzfläche zwischen der Membrangesamtfläche
und der Dichtfläche des Ventilkörpers und bewegt die
Membran und damit den Ventilkörper 43 auf die Ventilsitzfläche 40 zu, wodurch zwischen dieser und der
Kappe 45 die Wasserströmung gedrosselt wird.

Die durch den Strömungskanal 51, 52 strömende Flüssigkeit erzeugt an dem Ringspalt 53, unterstützt durch
die Venturirohr-artige Verengung eine Druckminderung
gegenüber dem statischen Druck auf der Auslaßseite,
die sich auch auf die Druckkammer 48 auswirkt und dementsprechend eine geringere Membranauslenkung und
einen höheren Strömungsdurchsatz bewirkt. Durch entsprechende Auslegung der Abmessungen des Strömungskanals und der Membran kann somit ein Gleichgewicht
gebildet werden, das einem bestimmten Durchflußmengenstrom einen bestimmten auslaßseitigen Druck zuordnet.
Dieser Druckanstieg gleicht die Strömungsverluste aus,
die im Bewässerungssystem bei höherem Durchsatz entstehen und sorgt dafür, daß an den einzelnen Bewässerungsstellen ein möglichst konstanter Druck vorliegt. Das ist besonders für die Tropfbewässerung vorteilhaft, kann jedoch auch für andere Bewässerungseinrichtungen, beispielsweise Sprenger, wichtig sein,
für die das Anschlußgerät ebenfalls vorgesehen sein
kann. Es wird also ein Druck erzeugt, der von den genannten Bedingungen abhängt und in deren Rahmen unabhängig vom Druck auf der Einlaßseite konstant ist, so
daß das auslaßseitige System nur auf einen bestimmten
Maximaldruck ausgelegt zu sein braucht.

Das Rückschlagventil 22 sorgt dafür, daß keinesfalls
Flüssigkeit aus dem Inneren des Anschlußgerätes über
den Einlaß zurückströmen kann, beispielsweise durch
Entstehen eines Unterdruckes auf der Einlaßseite.
Selbst wenn das Rückschlagventil undicht wäre, würde
dann die Manschette die Belüftungsöffnung 23 freigeben, über die der Unterdruck abgebaut werden würde.

0158250

Anmelderin:   GARDENA Kress + Kastner GmbH
              Lichternseestraße 40

              D-7900 Ulm /Donau


              Gerät zum Anschließen einer Be-
              wässerungsanlage


                     A n s p r ü c h e


1. Gerät zum Anschließen einer Bewässerungsanlage (60) an eine
   Leitung (67) für unter Druck stehendes Wasser, wobei die Bewässerungsanlage (60) eine Vielzahl von Bewässerungsauslässen (63) enthält, von denen jeder nur einen sehr geringen
   Wasserdurchsatz hat, dadurch gekennzeichnet,
   - daß  das Gerät (11) eine ein druckfestes Gehäuse (14) enthaltende Einheit mit einem an die Leitung (67) anschließbaren
   Einlaß (12) und einem an die Bewässerungsanlage (60) anschließbaren Auslaß (13) bildet,
   - daß  in Strömungsrichtung vor dem Auslaß (13) im Gehäuse (14)
   ein Druckregulierventil (42) angeordnet ist, das einen vom Druck
   in der Leitung (67) weitgehend unabhängigen Druck am Auslaß (13)
   einreguliert und
   - daß  die Einheit in Strömungsrichtung vor dem Druckregulierventil (42) einen Filter (28) und ein einen Rückfluß vom Gehäuse (14) zum Einlaß (12) sperrendes Rückschlagventil (22) enthält.


2. Gerät nach Anspruch 1, dadurch gekennzeichnet, daß das Druckregulierventil (42) zur Einregulierung eines bei gleichem Durchflußmengenstrom im wesentlichen konstanten Auslaßdruckes ausge-

0158250

- 2 -

bildet ist und eine Kompensationseinrichtung zur Erhöhung des Auslaßdruckes bei erhöhtem Durchflußmengenstrom aufweist.

3. Gerät nach Anspruch 2, dadurch gekennzeichnet, daß die Kompensationseinrichtung eine Abzweigung (50) zu einem Auslaß-Strömungskanal (51,52) und/oder eine Venturirohr-artig arbeitende Druckabsenkeinrichtung enthält.

4. Gerät nach einem der Ansprüche 1 bis 3, dadurch gekennzeichnet, daß das Druckregulierventil (42) eine Druckkammer (48) aufweist, an die eine einseitig vom Druck auf der Auslaßseite beaufschlagte, einen Ventilkörper (43) bewegende Membran (41) angrenzt und daß die Druckkammer (48) über die vorzugsweise als Ringspalt (53) ausgebildete Abzweigung (50) an einen auslaßseitigen Strömungskanal (51,52) angeschlossen ist.

5. Gerät nach Anspruch 4, dadurch gekennzeichnet, daß die federbelastete Membran (41) zentrisch den hohlen Ventilkörper (43) umgibt, der axial bewegbar abgedichtet im Gehäuse (14) des Gerätes (11) geführt ist und einen Auslaß-Strömungskanal-Abschnitt (51) umgibt, und wobei die Abzweigung (50) im Spalt (53) zwischen einem zum Ventilkörper (43) gehörenden Strömungskanal-Abschnitt (51) und einem anschließenden, in einem Gehäusedeckel (17) vorgesehenen Strömungskanal-Abschnitt (52) ausgebildet ist.

6. Gerät, insbesondere nach einem der Ansprüche 1 bis 5, dadurch gekennzeichnet, daß das Filter (28) ein am Gehäuse anbringbarer Einsatz ist, in Form eines zylindrischen Korbes ausgebildet ist, dessen Mantelflächen zumindest teilweise aus einem Siebmaterial (33) bestehen, wobei die Mantelflächen etwa parallel innerhalb der Mantelflächen des zylindrischen Gehäuses verlaufen und wobei der Filtereinsatz (28) in einem Raum einschließt, der den größten Teil einer im Gehäuse (14) gebildeten Filterkammer (36) einnimmt.

0158250

7. Gerät, insbesondere nach einem der Ansprüche 1 bis 6, dadurch gekennzeichret, daß im Gehäuse (14) stromauf vom Filter (28) Aufnahmemitteil für wasserlösliche Wirkstoffe vorgesehen sind.

8. Gerät nach einem der Ansprüche 1 bis 7, dadurch gekennzeichnet, daß die Aufnahmemitteil einen in einem vom Filter (28) umgebenen Raum hineinragenden, vom Wasser axial durchströmbaren, mit seitlichen Wasseraustritten versehenen Vorsprung (26) enthalten, die zur Aufnahme des Wirkstoffes in Form wenigstens einer ringförmigen, wasserlöslichen Tablette (34) ausgebildet ist, wobei im Inneren der Tablette (34) ein Strömungskanal gebildet wird.

9. Gerät nach Anspruch 8, dadurch gekennzeichnet, daß der Vorsprung 26 zentral an einem zu einem stirnseitigen Deckel (16) des Gehäuses (14) gehörenden abschraubbaren Einsatz (19) vorgesehen ist, an dem auch der Einlaß (12) zentral angeordnet ist.

10. Gerät nach einem der Ansprüche 1 bis 9, bei dem das Rückschlagventil (22) in einem einlaßseitigen Strömungskanal (24) vorgesehen ist und/oder vorzugsweise mit einem Belüftungsventil (23) verbunden ist.

Fig.1

Fig. 2

0158250